(19) Europäisches Patentamt / European Patent Office / Office européen des brevets

(11) **EP 4 674 816 A1**

(12) **EUROPEAN PATENT APPLICATION**

(43) Date of publication:
**07.01.2026 Bulletin 2026/02**

(21) Application number: **25185702.5**

(22) Date of filing: **26.06.2025**

(51) International Patent Classification (IPC):
**C01G 53/42** (2025.01)  **C01G 53/506** (2025.01)
**H01M 4/00** (2006.01)

(52) Cooperative Patent Classification (CPC):
**C01G 53/42; C01G 53/506;** C01P 2002/52;
C01P 2002/74

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.06.2024 KR 20240083703**

(71) Applicant: **SK On Co., Ltd.**
**Seoul 03161 (KR)**

(72) Inventors:
• **LIM, Byoung Beom**
**34124 Daejeon (KR)**
• **LEE, Sang Wook**
**34124 Daejeon (KR)**
• **LEE, Sang Han**
**34124 Daejeon (KR)**
• **KOO, Chan Woo**
**34124 Daejeon (KR)**
• **KIM, Eun Bi**
**34124 Daejeon (KR)**
• **LEE, Yoon Ji**
**34124 Daejeon (KR)**
• **CHO, Yong Hyun**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR LITHIUM SECONDARY BATTERY AND LITHIUM SECONDARY BATTERY INCLUDING THE SAME**

(57) A cathode active material for a lithium secondary battery according to embodiments of the present disclosure includes lithium-nickel-based metal oxide particles having a FWHM ratio of 2000% or less, as measured by in-situ X-ray diffraction (XRD) and defined by a specific equation.

FIG. 1

**Description**

BACKGROUND

1. Field of the Invention

The present disclosure relates to a cathode active material for a lithium secondary battery and a lithium secondary battery including the same. More specifically, the present disclosure relates to a cathode active material for a lithium secondary battery which includes a lithium-based active material and a lithium secondary battery including the cathode active material.

2. Description of the Related Art

A secondary battery is a battery that may be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-ffiendly automobiles such as an electric vehicle, a hybrid vehicle, etc., as their power sources.

Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are accommodated.

The lithium secondary battery may store an electric energy by a difference in chemical potential when lithium ions are intercalated and deintercalated between the cathode and the anode. Accordingly, the lithium secondary battery may use materials capable of reversibly intercalating and deintercalating the lithium ions as a cathode active material and an anode active material.

For example, a lithium-metal composite oxide may be used as the cathode active material, and examples of the lithium-metal composite oxide may include a lithium-nickel-based metal oxide. In the lithium-nickel-based metal oxide, a content of nickel may be increased to implement high energy density.

SUMMARY

An object of the present disclosure is to provide a cathode active material for a lithium secondary battery with improved stability and cycle life characteristics.

Another object of the present disclosure is to provide a lithium secondary battery with improved stability and cycle life characteristics.

A cathode active material for a lithium secondary battery according to exemplary embodiments of the present disclosure may include lithium-nickel-based metal oxide particles having an FWHM ratio of 2000% or less, as measured by in-situ x-ray diffraction (XRD) and defined by Equation 1 below:

[Equation 1]

$$\text{FWHM ratio } (\%) = 100 \times (\text{FWHM}_{max}(107) \, / \, \text{FWHM}_{min}(107))$$

(in Equation 1, $\text{FWHM}_{max}(107)$ is the maximum FWHM value of a (107) plane peak of the lithium-nickel-based metal oxide particles measured by in-situ XRD, and $\text{FWHM}_{min}(107)$ is the minimum FWHM value of the (107) plane peak of the lithium-nickel-based metal oxide particles measured by in-situ XRD).

In some embodiments, the FWHM ratio may be 1000% to 2000%.

In some embodiments, the FWHM ratio may be 1500% to 1900%.

In some embodiments, $\text{FWHM}_{max}(107)$ in Equation 1 may be 3.7 or less.

In some embodiments, $\text{FWHM}_{max}(107)$ in Equation 1 may be 3.5 or less.

In some embodiments, $\text{FWHM}_{min}(107)$ in Equation 1 may be 0.175 or more.

In some embodiments, $\text{FWHM}_{min}(107)$ in Equation 1 may be 0.185 or more.

In some embodiments, changes in the FWHM value of the (107) plane peak of the lithium-nickel-based metal oxide particles during charging and discharging of the lithium secondary battery may be measured in real time using in-situ XRD.

In some embodiments, the lithium-nickel-based metal oxide particles may include two or more types of doping elements.

In some embodiments, the lithium-nickel-based metal oxide particles may have a structure represented by Formula 2 below:

$$[Formula\ 2] \qquad Li_xNi_aCo_bMn_cM1_dM2_eO_{2+y}$$

In Formula 2, M1 and M2 each include at least one of Ti, Zr, Al, Mg and W, and $0.8<x<1.5$, $0.5\leq a\leq0.98$, $0.02\leq b+c\leq0.50$, $0.02\leq c\leq0.30$, $0<d+e\leq0.05$, $0.98\leq a+b+c\leq1.02$, $-0.1\leq y\leq0.1$.

In some embodiments, the molar ratio (d/e) of M1 to M2 in Formula 2 may be $0.05\leq d/e\leq5.5$.

In some embodiments, the molar ratio (d/e) of M1 to M2 in Formula 2 may be $1.25\leq d/e\leq3$.

A lithium secondary battery according to exemplary embodiments of the present disclosure may include: a cathode including a cathode active material layer containing the above-described cathode active material for a lithium secondary battery according to the embodiments; and an anode disposed opposite to the cathode.

According to an embodiment of the present disclosure, the distortion in the crystal structure of lithium-nickel-based metal oxide particles may be suppressed, and the cycle life characteristics of the lithium secondary battery may be improved.

According to an embodiment of the present disclosure, the structural stability of lithium-nickel-based metal oxide particles may be further improved during intercalation and deintercalation of lithium ions.

The cathode active material for a lithium secondary battery of the present disclosure and the lithium secondary battery including the same may be widely applied in green technology fields, such as electric vehicles, battery charging stations, as well as solar power generation, wind power generation, and the like, which use the batteries. The cathode active material for a lithium secondary battery of the present disclosure and the lithium secondary battery including the same may be used in eco-ffiendly electric vehicles, hybrid vehicles, and the like, which are aimed at mitigating climate change by reducing air pollution and greenhouse gas emission.

BRIEF DESCRIPTION OF THE DRAWINGS

The above and other objects, features and other advantages of the present disclosure will be more clearly understood from the following detailed description taken in conjunction with the accompanying drawings, in which:

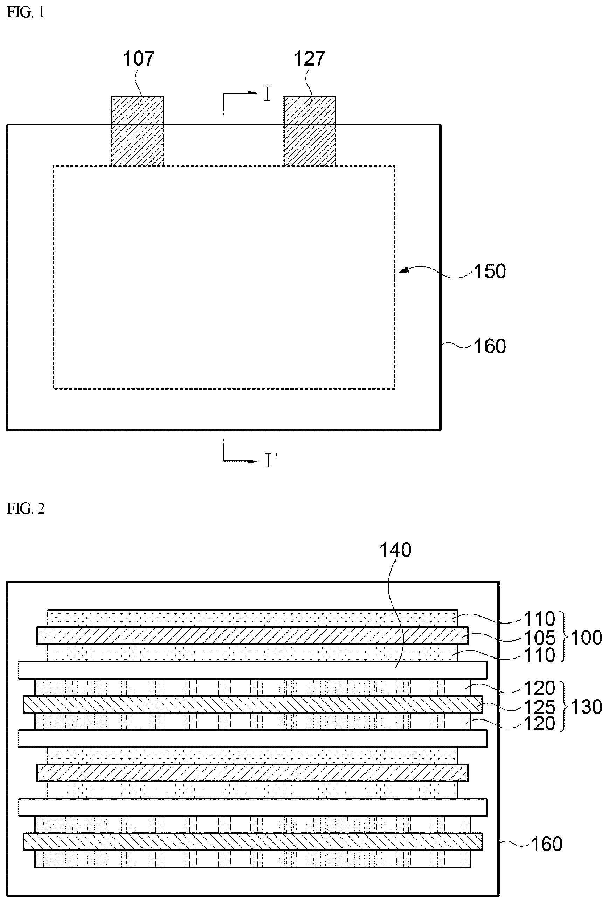

FIGS. 1 and 2 are schematic plan and cross-sectional views illustrating a lithium secondary battery according to exemplary embodiments, respectively.

DETAILED DESCRIPTION

Embodiments of the present disclosure provide a cathode active material which includes lithium-nickel-based metal oxide particles and a lithium secondary battery including the cathode active material.

Hereinafter, embodiments of the present disclosure will be described in detail. However, these are merely illustrative and the present disclosure is not limited to the specific embodiments described by way of example.

A cathode active material for a lithium secondary battery according to exemplary embodiments may include lithium-nickel-based metal oxide particles. For example, the lithium-nickel-based metal oxide particles may have a single-crystalline or polycrystalline structure in terms of crystallography.

In some embodiments, the lithium-nickel-based metal oxide particles may further include at least one of cobalt (Co) and manganese (Mn).

For example, nickel (Ni) may be provided as a metal associated with the capacity and output of the lithium secondary battery. The higher the content of nickel, the greater the improvement in capacity and output of the lithium secondary battery. However, if the content of nickel increases excessively, the cycle life of the lithium secondary battery may be reduced, and it can be disadvantageous in terms of mechanical and electrical stability.

For example, the content of Ni (e.g., the molar fraction of nickel based on the total number of moles of nickel, cobalt and manganese) in the lithium-nickel-based metal oxide particles may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

For example, cobalt (Co) may be a metal associated with the conductivity or resistance of the lithium secondary battery. For example, manganese (Mn) may be provided as a metal associated with the mechanical and electrical stability of the lithium secondary battery.

In one embodiment, the lithium-nickel-based metal oxide particles may include a plurality of primary particles.

For example, as the secondary battery is repeatedly charged and discharged, distortion may occur in the crystal structure within the primary particles included in the lithium-nickel-based metal oxide particles, or between the primary particles.

Accordingly, the stress and strain within the lithium-nickel-based metal oxide particles may increase, cracks may form in the lithium-nickel-based metal oxide particles, and the cycle life characteristics and high-temperature stability of the lithium secondary battery may deteriorate.

For example, the distortion of the above-described crystal structure may cause a shift in the peaks measured by X-ray diffraction (XRD) analysis.

As the charging and discharging of the lithium secondary battery progresses, the width of the measured peaks may broaden, resulting in an increase in the full width at half maximum (FWHM) value, and the difference between the maximum value of the FWHM and the minimum value of the FWHM during charging and discharging may increase.

In the exemplary embodiments of the present disclosure, the lithium-nickel-based metal oxide particles may have an FWHM ratio of 2000% or less, as measured by in-situ XRD and defined by Equation 1 below.

[Equation 1]

$$\text{FWHM ratio (\%)} = 100 \times (\text{FWHM}_{max}(107) \,/\, \text{FWHM}_{min}(107))$$

In Equation 1, $\text{FWHM}_{max}(107)$ may be the maximum FWHM value of the (107) plane peak of the lithium-nickel-based metal oxide particles measured by in-situ XRD. For example, $\text{FWHM}_{max}(107)$ may be the maximum FWHM value of the (107) plane peak of the lithium-nickel-based metal oxide particles measured by in-situ XRD during a single charge-discharge cycle of the lithium secondary battery.

In Equation 1, $\text{FWHM}_{min}(107)$ may be the minimum FWHM value of the (107) plane peak of the lithium-nickel-based metal oxide particles measured by in-situ XRD. For example, $\text{FWHM}_{min}(107)$ may be the minimum FWHM value of the (107) plane peak of the lithium-nickel-based metal oxide particles measured by in-situ XRD during a single charge-discharge cycle of the lithium secondary battery.

For example, in Equation 1, $\text{FWHM}_{max}(107)$ may be the FWHM(107) value at the point where the crystal structure of the lithium-nickel-based metal oxide particles undergo the greatest deformation during charging and discharging.

For example, in Equation 1, $\text{FWHM}_{min}(107)$ may be the FWHM(107) value in the state before the crystal structure of the lithium-nickel-based metal oxide particles begin to undergo deformation.

For example, if the FWHM ratio exceeds 2000%, the distortion in the crystal structure of the lithium-nickel-based metal oxide particles may not be sufficiently suppressed, and thus cracks may form in the lithium-nickel-based metal oxide particles. Accordingly, the cycle life characteristics and high-temperature storage characteristics of the lithium secondary battery may deteriorate.

In some embodiments, the FWHM ratio of the lithium-nickel-based metal oxide particles, as measured by in-situ XRD and defined by Equation 1, may be 1000% to 2000%, 1500% to 1900%, 1500% to 1800%, 1500% to 1700%, or 1500% to 1600%. Alternatively, in some embodiments, it may be 1500% or more, 1600% or more, 1700% or more, 1800% or more, or 1900% or more, and 2000% or less, 1900% or less, 1800% or less, 1700% or less, 1600% or less, or 1500% or less.

When the FWHM ratio falls within the above-described range, the crystal grain size and crystallinity of the lithium-nickel-based metal oxide particles may be appropriately controlled, thereby preventing deformation of the crystal structure. Accordingly, cracks in the lithium-nickel-based metal oxide particles and side reactions within the electrode may be prevented, and the cycle life characteristics of the battery may be improved.

In some embodiments, in Equation 1, $\text{FWHM}_{max}(107)$ may be 3.7 or less, for example, 3.5 or less, 3.3 or less, 3.2 or less, 3.0 to 3.7, 3.0 to 3.5, or 3.05 to 3.4. Alternatively, in some embodiments, it may be 3.0 or more, 3.3 or more, 3.4 or more, or 3.6 or more.

Within the above range, excessive deformation of the crystal structure of the lithium-nickel-based metal oxide particles during the charge-discharge process may be prevented, and the cycle life characteristics of the lithium secondary battery may be improved.

In some embodiments, in Equation 1, $\text{FWHM}_{min}(107)$ may be 0.175 or more, for example, 0.185 or more, 0.19 or more, 0.175 to 0.25, 0.18 to 0.23, 0.19 to 0.21. Alternatively, in some embodiments, it may be 0.25 or less, 0.23 or less, 0.21 or less, 0.20 or less, 0.19 or less, or 0.18 or less.

Within the above range, the crystal grain size and crystallinity of the lithium-nickel-based metal oxide particles may be appropriately controlled, and crack formation may be suppressed.

For example, in-situ XRD may refer to equipment that enables real-time observation of changes in the crystal structure during charging and discharging of the lithium secondary battery.

For example, a lithium secondary battery (e.g., a coin cell) may be assembled by attaching it to one side of an in-situ XRD device. After performing a formation charge-discharge process (CC-CV 0.1C, 4.2V CUT-OFF 0.05C; CC 0.1C CUT-OFF 2.5V) on the assembled lithium secondary battery, additional charge and discharge cycles may be conducted to perform real-time XRD analysis. The charge and discharge may be performed under the same conditions as the formation charge-discharge process, and analysis may be performed once every about 7 to 8 minutes.

According to an embodiment, the X'Pert PRO (PANalytical) may be used as the in-situ XRD device.

For example, the change in the FWHM value of the (107) plane peak of the lithium-nickel-based metal oxide particles during charging and discharging of the lithium secondary battery may be measured in real time using in-situ XRD. Accordingly, the degree of distortion of the crystal structure of lithium-nickel-based metal oxide particles during the charge-discharge process may be evaluated in real time.

In some embodiments, the lithium-nickel-based metal oxide particles may include two or more types of doping elements.

For example, the doping elements may be uniformly distributed at the lithium sites or the transition metal sites of the lithium-nickel-based metal oxide particles, thereby improving the structural stability of the lithium-nickel-based metal oxide particles during intercalation and deintercalation of lithium ions.

Accordingly, the distortion in the crystal structure and phase transition of the lithium-nickel-based metal oxide particles may be suppressed, and the FWHM ratio may be reduced.

For example, the lithium-nickel-based metal oxide particles may further include at least one of cobalt (Co), manganese (Mn) and aluminum (Al).

In some embodiments, the lithium-nickel-based metal oxide particles may include a layered structure or a crystal structure represented by Formula 1 below.

[Formula 1] $\quad Li_pNi_rJ_sO_{2+q}$

In Formula 1, p, r, s and q may satisfy $0.9 \leq p \leq 1.2$, $0.5 \leq r \leq 0.99$, $0.01 \leq s \leq 0.5$, $-0.5 \leq q \leq 0.1$. As described above, J may include Co, Mn and/or Al.

The chemical structure represented by Formula 1 indicates a bonding relationship between elements included in the layered structure or crystal structure of the cathode active material, and does not exclude other additional elements. For example, J includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or doping element may exist on the surface of the lithium-nickel-based metal oxide particles, or may penetrate through the surface of the lithium-nickel-based metal oxide particles to become incorporated into the bonding structure represented by Formula 1.

The above descriptions regarding the chemical structure, auxiliary elements, coating elements or doping elements in Formula 1 may also be applied to Formula 2 below.

In some embodiments, the lithium-nickel-based metal oxide particles may have a structure represented by Formula 2 below.

[Formula 2] $\quad Li_xNi_aCo_bMn_cM1_dM2_eO_{2+y}$

In Formula 2, M1 and M2 each independently include at least one of Ti, Zr, Al, Mg and W, and the relationship among x, a, b, c, d, e and y may satisfy $0.8 < x < 1.5$, $0.50 \leq a \leq 0.98$, $0 \leq b+c \leq 0.50$, $0.02 \leq c \leq 0.30$, $0 < d+e \leq 0.05$, $0.98 \leq a+b+c \leq 1.02$, $-0.1 < y < 0.1$.

For example, M1 and M2 may each be provided as doping elements.

The structural stability of the lithium-nickel-based metal oxide particles having the structure represented by Formula 2 above may be improved through a small amount of doping, without a significant reduction in capacity characteristics. Accordingly, the cycle life characteristics of the lithium secondary battery may be improved.

According to some embodiments, the molar ratio (d/e) of M1 to M2 in Formula 2 may be 0.05≤d/e≤5.5, for example, 125≤d/e≤3.

Within the above range, different types of doping elements, M1 and M2, may be uniformly distributed at the lithium sites and the transition metal sites of the lithium-nickel-based metal oxide. Accordingly, distortion of the crystal structure during the charge-discharge process may be further reduced.

In exemplary embodiments, the lithium-nickel-based metal oxide particles described above may be formed through a reaction between a lithium precursor and a transition metal precursor (e.g., a Ni-Co-Mn precursor).

For example, the transition metal precursor may be prepared by a co-precipitation reaction of metal salts. The metal salts may include nickel salts, manganese salts and cobalt salts.

Examples of the nickel salt may include nickel sulfate, nickel nitrate, nickel acetate, and a hydrate thereof, etc. Examples of the manganese salt may include manganese sulfate, manganese acetate, and a hydrate thereof, etc. Examples of the cobalt salt may include cobalt sulfate, cobalt nitrate, cobalt carbonate, and a hydrate thereof, etc.

The metal salts may be mixed with a precipitant and/or a chelating agent in a ratio that satisfies the content of each metal or the concentration ratios described with reference to Formula 2 to prepare an aqueous solution. The aqueous solution may be subjected to co-precipitation in a reactor to prepare the transition metal precursor.

The precipitant may include an alkaline compound such as sodium hydroxide (NaOH), sodium carbonate ($Na_2CO_3$) and the like. The chelating agent may include, for example, ammonium hydroxide (e.g., $NH_3H_2O$), ammonium carbonate (e.g., $NH_3HCO_3$) and the like.

The temperature of the co-precipitation reaction may be controlled, for example, in the range of about 40 °C to 60 °C. The reaction time may be adjusted in the range of about 24 hours to 72 hours.

For example, a transition metal precursor may be reacted with a doping element source including a lithium precursor and a doping element to prepare lithium-nickel-based metal oxide particles. The lithium precursor compound may include, for example, lithium carbonate, lithium nitrate, lithium acetate, lithium oxide, lithium hydroxide, etc. These may be used alone or in combination of two or more thereof.

For example, the doping element source may include titanium dioxide, titanium butoxide, manganese sulfate hydrate, aluminum hydroxide, magnesium hydroxide, zirconium hydroxide, zirconium dioxide, yttria-stabilized zirconia, tungsten oxide, etc. These may be used alone or in combination of two or more thereof.

Thereafter, the metal particles may be fixed or crystallinity thereof may be increased through a heat treatment (calcination) process. In one embodiment, the heat treatment temperature may be in the range of about 600 °C to 1000 °C.

Hereinafter, a lithium secondary battery which includes a cathode including the above-described cathode active material for a lithium secondary battery will be described with reference to FIGS. 1 and 2.

FIGS. 1 and 2 are schematic plan and cross-sectional views illustrating the lithium secondary battery according to exemplary embodiments, respectively. FIG. 2 is a cross-sectional view taken along line I-I' of FIG. 1.

Referring to FIGS. 1 and 2, the lithium secondary battery may include a cathode 100 including the above-described cathode active material for a lithium secondary battery according to the exemplary embodiments, and an anode 130 disposed opposite to the cathode 100.

The cathode 100 may include a cathode active material layer 110 formed by applying a cathode active material including the lithium-nickel-based metal oxide particles described above to a cathode current collector 105.

For example, the cathode active material prepared by the above-described preparation method may be mixed and stirred with a binder, a conductive material and/or a dispersant in a solvent to prepare a slurry. The slurry may be applied to at least one surface of the cathode current collector 105, then dried and compressed to prepare the cathode 100.

For example, the cathode current collector 105 may include stainless steel, nickel, aluminum, titanium, or an alloy thereof. The cathode current collector may also include aluminum or stainless steel having a surface treated with carbon, nickel, titanium, or silver. The cathode current collector may have a thickness of, for example, 10 μm to 50 μm, but it is not limited thereto.

The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally further include a conductive material, a thickener or the like.

Non-limiting examples of the solvent may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. In one embodiment, a PVDF-based binder may be used as the cathode binder.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), carbon fibers, and/or metal-based conductive materials, including perovskite materials, such as tin, tin oxide, titanium oxide, $LaSrCoO_3$, and $LaSrMnO_3$.

As the thickener, for example, carboxymethyl cellulose (CMC) may be used.

The anode 130 may include an anode current collector 125 and an anode active material layer 120 formed by coating the anode current collector 125 with an anode active material.

As the anode active material, any material known in the related art that can intercalate and deintercalate lithium ions may be used without particular limitation. For example, carbon-based materials such as crystalline carbon, amorphous carbon, carbon composites, carbon fibers, etc.; lithium metal; lithium alloys; silicon silicon (Si) compounds or tin-containing materials may be used.

Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon compound may include, for example, silicon (Si), silicon oxide (e.g., SiOx, 0<x<2) or a silicon-carbon composite compound such as silicon carbide (SiC).

For example, a form of slurry may be prepared by mixing the anode active material with the above-described binder, conductive material, thickener, and the like in a solvent, followed by stirring the same. The slurry may be applied to at least one surface of the anode current collector 125, followed by compression and drying to prepare the anode 130.

The coating process may be performed by methods such as gravure coating, slot die coating, simultaneous multilayer die coating, imprinting, doctor blade coating, dip coating, bar coating, casting, etc., but it is not limited thereto.

For example, non-limiting examples of the anode current collector 125 may include a copper foil, a nickel foil, a stainless steel foil, a titanium foil, a nickel foam, a copper foam, a polymer substrate coated with a conductive metal and the like. The anode current collector may have a thickness of 10 μm to 50 μm, for example, but it is not limited thereto.

Non-limiting examples of the solvent may include water, pure water, deionized water, distilled water, ethanol, isopropanol, methanol, acetone, n-propanol, t-butanol and the like.

The above-described materials that can be used when preparing the cathode as the binder, conductive material and thickener may be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

In some embodiments, the anode may include an anode active material layer in the form of a lithium metal formed through a deposition/coating process.

In one embodiment, a separation membrane 140 may be interposed between the cathode 100 and the anode 130. The separation membrane may prevent electrical short-circuit between the cathode and the anode, and maintain flow of ions. According to an embodiment, the separation membrane may have a thickness of 10 μm to 20 μm, but in the present disclosure, it is not limited thereto.

In some embodiments, the anode 130 may have an area (e.g., a contact area with the separation membrane 140) larger than that of the cathode 100. Thereby, lithium ions generated from the cathode 100 may smoothly migrate to the anode 130 without being precipitated during the process.

For example, the separation membrane 140 may include a porous polymer film made of a polyolefin polymer, such as an ethylene polymer, a propylene polymer, an ethylene/butene copolymer, an ethylene/hexene copolymer, and an ethylene/methacrylate copolymer, etc.

For example, the separation membrane 140 may include a nonwoven fabric formed of glass fibers having a high melting point, polyethylene terephthalate fibers and the like.

For example, an electrode cell may be formed by including the cathode 100, the anode 130 and the separation membrane 140. In addition, a plurality of electrode cells may be stacked to form an electrode assembly 150. For example, the electrode assembly 150 may be formed by winding, stacking, z-folding, or stack-folding the separation membrane 140.

The electrode assembly 150 may be accommodated in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, F, $Cl^-$, $Br^-$, $I^-$, $NO_3^-$, $N(CN)_2^-$, $BF_4^-$, $ClO_4^-$, $PF_6^-$,

$(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility to the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case to form electrode leads (a cathode lead 108 and an anode lead 128) that extend or are exposed to the outside of the case 160.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

Example **1**

(1) Preparation of lithium-nickel-based metal oxide particles

$NiSO_4$, $CoSO_4$ and $MnSO_4$ were mixed in a ratio of 0.885:0.090:0.025 using distilled water from which dissolved oxygen had been removed by bubbling $N_2$ through it for 24 hours. The solution was introduced into a reactor at 50 °C, and NaOH as a precipitant and $NH_3H_2O$ as a chelating agent were added thereto, followed by performing a co-precipitation reaction for 48 hours to obtain $Ni_{0.885}Co_{0.09}Mn_{0.025}(OH)_2$ as a transition metal precursor. The obtained precursor was dried at 80 °C for 12 hours, and then further dried at 110 °C for 12 hours.

Lithium hydroxide and the transition metal precursor were added to a dry high-speed mixer in a ratio of 1.01:1, and titanium dioxide and zirconium hydroxide were added so that the molar ratio of Ni:Co:Mn:Ti:Zr was 0.885:0.090:0.025:0.015:0.01. The mixture was then uniformly mixed for 5 minutes. The composition was synthesized so that the composition ratio of M1 (Ti) in Formula 2 was 0.005, the composition ratio of M2 (Zr) was 0.002, and the d/e ratio was 2.5.

The mixture was placed in a calcination furnace, heated to 730 to 750 °C at a rate of 2 °C/min, and maintained at 730 to 750 °C for 10 hours. Oxygen was continuously supplied at a flow rate of 20 mL/min during the heating and holding steps. After completion of the calcination, the mixture was naturally cooled to room temperature, then pulverized and classified to prepare lithium-nickel-based metal oxide particles having a composition of $LiNi_{0.885}Co_{0.09}Mn_{0.025}Ti_{0.005}Zr_{0.02}O_2$.

(2) Manufacturing of lithium secondary battery

A lithium secondary battery was manufactured using the obtained lithium-nickel-based metal oxide particles as a cathode active material.

Specifically, the cathode active material, Denka Black as a conductive material, and PVDF as a binder were mixed in a mass ratio of 97:2:1 to prepare a cathode slurry. The manufactured cathode slurry was applied to an aluminum current collector, then dried and pressed to prepare a cathode.

An anode slurry, which included 93 wt% of natural graphite as an anode active material, 5 wt% of KS6 as a flake-type conductive material, 1 wt% of styrene-butadiene rubber (SBR) as a binder, and 1 wt% of carboxymethyl cellulose (CMC) as a thickener, was prepared. The anode slurry was applied to a copper substrate, then dried and pressed to prepare an anode.

The cathode and the anode prepared as described above were respectively notched into a predetermined size and stacked, then an electrode cell was fabricated by interposing a separator (polyethylene, thickness: 25 $\mu$m) between the cathode and the anode. Thereafter, tab parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part. After injecting the electrolyte through the remaining open side except for the sealing part, the remaining open side was also sealed, followed by allowing the cell to be impregnated for 12 hours or more.

A solution, prepared by dissolving 1M LiPF$_6$ solution in a mixed solvent of EC/EMC/DEC (25/45/30; volume ratio) and further adding 1 wt% of vinylene carbonate (VC), 0.5 wt% of 1,3 -propene sultone (PRS), and 0.5 wt% of lithium bis(oxalato)borate (LiBOB), was used as the electrolyte.

Then, pre-charging was conducted on the secondary battery manufactured as described above with a current (5A) corresponding to 0.25C for 36 minutes. After 1 hour, degassing was performed, then aging for 24 hours or more was conducted, followed by performing formation charging and discharging (charging conditions: CC-CV 0.2C 4.2V 0.05C CUT-OFF; discharging conditions: CC 0.2C 2.5V CUT-OFF).

**Example 2**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.010}Zr_{0.005}O_2$.

**Example 3**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.015}Zr_{0.005}O_2$.

**Example 4**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.025}Zr_{0.02}O_2$.

**Example 5**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.03}Zr_{0.01}O_2$.

**Comparative Example 1**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.05}Zr_{0.1}O_2$.

**Comparative Example 2**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.06}Zr_{0.12}O_2$.

**Comparative Example 3**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mns_{0.05}Ti_{0.08}Zr_{0.16}O_2$.

**Comparative Example 4**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.09}Zr_{0.18}O_2$.

**Comparative Example 5**

A lithium-nickel-based metal oxide and a lithium secondary battery were manufactured in the same manner as in Example 1, except that the molar ratio of Ni, Co, Mn, Ti and Zr was adjusted so that the lithium-nickel-based metal oxide particles had a composition of $LiNi_{0.9}Co_{0.05}Mn_{0.05}Ti_{0.1}Zr_{0.2}O_2$.

**Experimental Example**

(1) Calculation of molar ratio (d/e) of doping elements

In the chemical formulas of the lithium-nickel-based metal oxide particles of the examples and comparative examples, the doping element listed after Mn is defined as M1 in Formula 2, and the doping element listed after M1 is defined as M2 in Formula 2. The molar ratio of the doping elements, d/e, was then calculated. The calculation results are shown in Table 1 below.

(2) Measurement of FWHM value of (107) plane peak

The lithium secondary batteries of the examples and comparative examples were each manufactured as coin cells for in-situ measurement. After performing a formation process by conducting one cycle of charging (CC-CV 0.1C 4.2V 0.05C CUT-OFF) and discharging (CC 0.01C 2.5V CUT-OFF) on the coin cells, in-situ XRD measurements were carried out using X'Pert PRO, Empyrean equipment manufactured by PANalytical.
The coin cell was placed in the in-situ XRD device, and one cycle of charging (CC-CV 0.1C 4.2V 0.05C CUT-OFF) and discharging (CC 0.1C 2.5V CUT-OFF) was performed. During each charge-discharge process, the FWHM value of the (107) plane peak of the lithium-nickel-based metal oxide particles was measured once every 7 minutes.
The maximum FWHM value measured was defined as $FWHM_{max}(107)$, and the minimum FWHM value was defined as $FWHM_{min}(107)$, and the FWHM ratio was calculated according to Equation 1. The calculated results are shown in Table 1 below.

(3) Evaluation of high-temperature storage characteristics (at 60°C)

1) Measurement of capacity retention rate after high-temperature storage (at 60°C)

The lithium secondary batteries of the examples and comparative examples were subjected to three cycles of charging at 25°C using 0.5C CC/CV (3.65V, 0.05C CUT-OFF) and discharging using 0.5C CC (2.5V CUT-OFF). The discharge capacity C1 at the third cycle was then measured.
The charged lithium secondary batteries were stored at 60°C for 12 weeks, then left at room temperature for additional 30 minutes, followed by 0.5C CC discharge (2.5V CUT-OFF) to measure the discharge capacity C2. The high-temperature storage capacity retention rate was calculated as follows, and the calculated results are shown in Table 2 below.

$$\text{High-temperature storage capacity retention rate } (\%) = C2 / C1 \times 100$$

2) Evaluation of resistance after high-temperature storage (at 60°C)

After the lithium secondary batteries of the examples and comparative examples were left under ambient exposure conditions at 60°C for 12 weeks (using a thermostatic device), charging and discharging were performed at each corresponding C-rate for 10 seconds, while sequentially varying the C-rate to 0.2C, 0.5C, 1.0C, 1.5C, 2.0C, 2.5C and 3.0C at a 60% state-of-charge (SOC) point at 25°C. Then, the terminal voltage points were plotted to construct a linear equation, and the slope of the resulting line was adopted as the DCIR.

The DCIR measured during the initial resistance evaluation was defined as R1, and the DCIR measured during the resistance evaluation after high-temperature storage was defined as R2. The DCIR increase rate was calculated as follows, and the results are shown in Table 2 below.

$$\text{High-temperature storage resistance increase rate } (\%) = \{(R2 - R1) / R1 + 1\} \times 100$$

(4) Evaluation of high-temperature cycle life characteristic (at 60°C)

After 500 cycles of repeated charging (CC/CV 0.5C 4.3V 0.05C CUT-OFF) and discharging (CC 1.0C 3.0V CUT-OFF) were performed on the lithium secondary batteries prepared according to the examples and comparative examples, the discharge capacity at the 500th cycle was determined by calculating the discharge capacity at the 500th cycle as a percentage of the discharge capacity at the 1st cycle. The evaluated results are shown in Table 2 below.

[TABLE 1]

| Classification | Doping metal | | d/e | FWHM of (107) plane peak | | |
|---|---|---|---|---|---|---|
| | M1 | M2 | | $FWHM_{max}$ | $FWHM_{min}$ | FWHM ratio (%) |
| Example 1 | 0.005 | 0.002 | 2.5 | 3.65 | 0.185 | 1973.0 |
| Example 2 | 0.010 | 0.005 | 2 | 3.499 | 0.191 | 1832.0 |
| Example 3 | 0.015 | 0.005 | 3 | 3.370 | 0.189 | 1785.0 |
| Example 4 | 0.025 | 0.02 | 1.25 | 3.062 | 0.185 | 1655.0 |
| Example 5 | 0.030 | 0.01 | 3 | 3.050 | 0.200 | 1525.0 |
| Comparative Example 1 | 0.05 | 0.10 | 0.5 | 4.000 | 0.170 | 2352.9 |
| Comparative Example 2 | 0.06 | 0.12 | 0.5 | 3.800 | 0.150 | 2533.3 |
| Comparative Example 3 | 0.08 | 0.16 | 0.5 | 3.645 | 0.162 | 2250.0 |
| Comparative Example 4 | 0.09 | 0.18 | 0.5 | 3.400 | 0.158 | 2152.0 |
| Comparative Example 5 | 0.10 | 0.2 | 0.5 | 3.300 | 0.161 | 2049.7 |

[TABLE 2]

| Classification | High-temperature storage [1] capacity retention rate (%) | High-temperature storage [1] resistance increase rate (%) | High-temperature cycle life [2] capacity retention rate (%, 500 cycles) |
|---|---|---|---|
| | 12 weeks | 12 weeks | |
| Example 1 | 89 | 106 | 83 |
| Example 2 | 90 | 104 | 85 |
| Example 3 | 88 | 105 | 86 |
| Example 4 | 89 | 103 | 87 |
| Example 5 | 90 | 103 | 88 |
| Comparative Example 1 | 83 | 110 | 77 |

(continued)

| Classification | High-temperature storage [1] capacity retention rate (%) | High-temperature storage [1] resistance increase rate (%) | High-temperature cycle life [2] capacity retention rate (%, 500 cycles) |
| --- | --- | --- | --- |
| | 12 weeks | 12 weeks | |
| Comparative Example 2 | 81 | 109 | 74 |
| Comparative Example 3 | 78 | 112 | 78 |
| Comparative Example 4 | 77 | 109 | 77 |
| Comparative Example 5 | 86 | 108 | 79 |
| [1] at 60°C for 12 weeks [2] at 60°C | | | |

Referring to Tables 1 and 2, in Examples 1 to 5, where lithium-nickel-based metal oxide particles having a FWHM ratio of 2000% or less according to Equation 1 were used, both high-temperature storage characteristics and high-temperature cycle life characteristics were improved.

In the batteries of Comparative Examples 1 to 5, where lithium-nickel-based metal oxide particles having a FWHM ratio greater than 2000% according to Equation 1 were used, the capacity retention rate during high-temperature storage evaluation was low, the resistance increase rate was high, and the capacity retention rate during high-temperature cycle life evaluation was also low.

**Claims**

1. A cathode active material for a lithium secondary battery, comprising lithium-nickel-based metal oxide particles having an FWHM ratio of 2000% or less, as measured by in-situ x-ray diffraction (XRD) and defined by Equation 1 below:

[Equation 1]

$$\text{FWHM ratio (\%)} = 100 \times (\text{FWHM}_{max}(107) / \text{FWHM}_{min}(107))$$

(in Equation 1, $\text{FWHM}_{max}(107)$ is the maximum FWHM value of a (107) plane peak of the lithium-nickel-based metal oxide particles measured by in-situ XRD, and $\text{FWHM}_{min}(107)$ is the minimum FWHM value of the (107) plane peak of the lithium-nickel-based metal oxide particles measured by in-situ XRD).

2. The cathode active material for a lithium secondary battery according to claim 1, wherein the FWHM ratio is 1000% to 2000%.

3. The cathode active material for a lithium secondary battery according to claim 1, wherein the FWHM ratio is 1500% to 1900%.

4. The cathode active material for a lithium secondary battery according to any one of claims 1 to 3, wherein $\text{FWHM}_{max}$ (107) in Equation 1 is 3.7 or less.

5. The cathode active material for a lithium secondary battery according to any one of claims 1 to 4, wherein $\text{FWHM}_{max}$ (107) in Equation 1 is 3.5 or less.

6. The cathode active material for a lithium secondary battery according to any one of claims 1 to 5, wherein $\text{FWHM}_{min}$ (107) in Equation 1 is 0.175 or more.

7. The cathode active material for a lithium secondary battery according to any one of claims 1 to 6, wherein $\text{FWHM}_{min}$ (107) in Equation 1 is 0.185 or more.

8. The cathode active material for a lithium secondary battery according to any one of claims 1 to 7, wherein changes in the FWHM value of the (107) plane peak of the lithium-nickel-based metal oxide particles during charging and discharging of the lithium secondary battery are measured in real time using in-situ XRD.

9. The cathode active material for a lithium secondary battery according to any one of claims 1 to 8, wherein the lithium-nickel-based metal oxide particles comprise two or more types of doping elements.

10. The cathode active material for a lithium secondary battery according to any one of claims 1 to 9, wherein the lithium-nickel-based metal oxide particles have a structure represented by Formula 2 below:

[Formula 2] $Li_xNi_aCo_bMn_cM1_dM2_eO_{2+y}$

(in Formula 2, M1 and M2 each comprise at least one of Ti, Zr, Al, Mg and W, and $0.8<x<1.5$, $0.5\leq a\leq 0.98$, $0.02\leq b+c\leq 0.50$, $0.02\leq c\leq 0.30$, $0<d+e\leq 0.05$, $0.98\leq a+b+c\leq 1.02$, $-0.1\leq y\leq 0.1$).

11. The cathode active material for a lithium secondary battery according to claim 10, wherein the molar ratio (d/e) of M1 to M2 in Formula 2 is $0.05 \leq d/e \leq 5.5$.

12. The cathode active material for a lithium secondary battery according to claim 10, wherein the molar ratio (d/e) of M1 to M2 in Formula 2 is $1.25 \leq d/e \leq 3$.

13. A lithium secondary battery comprising:

a cathode comprising the cathode active material for a lithium secondary battery according to any one of claims 1 to 12; and
an anode disposed opposite to the cathode.

FIG. 1

107  127

→ I

150

160

I'

FIG. 2

140

110
105    100
110

120
125    130
120

160

Europäisches
Patentamt

European
Patent Office

Office européen
des brevets

# EUROPEAN SEARCH REPORT

**Application Number**

EP 25 18 5702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHU ZHENHUA ET AL: "Enhanced structural and electrochemical stability of LiNi0.83Co0.11Mn0.06O2 cathodes by zirconium and aluminum co-doping for lithium-ion battery", JOURNAL OF POWER SOURCES, vol. 498, 1 June 2021 (2021-06-01), page 229857, XP093331550, AMSTERDAM, NL ISSN: 0378-7753, DOI: 10.1016/j.jpowsour.2021.229857 * examples * ----- | 1-13 | INV. C01G53/42 C01G53/506 H01M4/00 |
| X | US 2021/305564 A1 (MANTHIRAM ARUMUGAM [US] ET AL) 30 September 2021 (2021-09-30) * examples * ----- | 1-13 | |
| X | EP 4 131 485 A1 (SVOLT ENERGY TECH CO LTD [CN]) 8 February 2023 (2023-02-08) * examples * ----- | 1-13 | TECHNICAL FIELDS SEARCHED (IPC) |
| X | CHOI SEOKYOUNG ET AL: "High Entropy and Co-Free High Nickel Based Layered LiNi 0.9 Mn 0.1 O 2 Cathode for Li-Ion Batteries", ACS APPLIED ENERGY MATERIALS, vol. 7, no. 8, 3 April 2024 (2024-04-03), pages 3339-3346, XP093339279, United States ISSN: 2574-0962, DOI: 10.1021/acsaem.4c00095 Retrieved from the Internet: URL:https://pubs.acs.org/doi/pdf/10.1021/acsaem.4c00095> * examples * ----- -/-- | 1-13 | C01G H01M |

The present search report has been drawn up for all claims

| Place of search | Date of completion of the search | Examiner |
|---|---|---|
| Munich | 21 November 2025 | Doslik, Natasa |

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 18 5702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN YONGXIANG ET AL: "High-voltage electrochemical performance of LiNi0.5Co0.2Mn0.3O2 cathode material via the synergetic modification of the Zr/Ti elements", ELECTROCHIMICA ACTA, vol. 281, 1 August 2018 (2018-08-01), pages 48-59, XP093339264, AMSTERDAM, NL ISSN: 0013-4686, DOI: 10.1016/j.electacta.2018.05.154 Retrieved from the Internet: URL:https://pdf.sciencedirectassets.com/271355/1-s2.0-S0013468618X00218/1-s2.0-S001346861831209X/main.pdf?hash=408dc5f3f559a8250be443dabe5ccbfbbbb42f6124fbce8dea7ce27d70164558&host=68042c943591013ac2b2430a89b270f6af2c76d8dfd086a07176afe7c76c2c61&pii=S001346861831209X&tid=spdf-f8108b0e-eeb8-4266-8c0b-2fd> * examples * ----- | 1-13 | |
| X | ZHOULIANG TAN ET AL: "Enabling Superior Cycling Stability of LiNi0.9Co0.05Mn0.05O2 with Controllable Internal Strain", ADVANCED FUNCTIONAL MATERIALS, WILEY, HOBOKEN, USA, vol. 33, no. 26, 16 March 2023 (2023-03-16), page n/a, XP072588806, ISSN: 1616-301X, DOI: 10.1002/ADFM.202215123 * examples * ----- | 1-10,13 | TECHNICAL FIELDS SEARCHED (IPC) |
| X | EP 4 243 117 A1 (LG CHEMICAL LTD [KR]) 13 September 2023 (2023-09-13) * examples * ----- -/-- | 1-10,13 | |

The present search report has been drawn up for all claims

| Place of search | Date of completion of the search | Examiner |
|---|---|---|
| Munich | 21 November 2025 | Doslik, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt

European
Patent Office

Office européen
des brevets

Application Number

EP 25 18 5702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG DENGKE ET AL: "Effect of Ti ion doping on electrochemical performance of Ni-rich LiNi0.8Co0.1Mn0.1O2 cathode material", ELECTROCHIMICA ACTA, ELSEVIER, AMSTERDAM, NL, vol. 328, 15 October 2019 (2019-10-15), XP085898484, ISSN: 0013-4686, DOI: 10.1016/J.ELECTACTA.2019.135086 [retrieved on 2019-10-15] * examples * ----- | 1-10,13 | |

TECHNICAL FIELDS
SEARCHED      (IPC)

The present search report has been drawn up for all claims

| Place of search | Date of completion of the search | Examiner |
|---|---|---|
| Munich | 21 November 2025 | Doslik, Natasa |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

page 3 of 3

## ANNEX TO THE EUROPEAN SEARCH REPORT
## ON EUROPEAN PATENT APPLICATION NO.

EP 25 18 5702

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | | Publication date | Patent family member(s) | | Publication date |
|---|---|---|---|---|---|
| US 2021305564 | A1 | 30-09-2021 | AU | 2021241695 A1 | 10-11-2022 |
| | | | BR | 112022019431 A2 | 06-12-2022 |
| | | | CA | 3177378 A1 | 30-09-2021 |
| | | | CN | 115917809 A | 04-04-2023 |
| | | | EP | 4128412 A1 | 08-02-2023 |
| | | | JP | 2023518984 A | 09-05-2023 |
| | | | KR | 20220159404 A | 02-12-2022 |
| | | | US | 2021305564 A1 | 30-09-2021 |
| | | | US | 2022181618 A1 | 09-06-2022 |
| | | | US | 2023108718 A1 | 06-04-2023 |
| | | | WO | 2021195524 A1 | 30-09-2021 |
| EP 4131485 | A1 | 08-02-2023 | CN | 111430689 A | 17-07-2020 |
| | | | EP | 4131485 A1 | 08-02-2023 |
| | | | US | 2023009617 A1 | 12-01-2023 |
| | | | WO | 2021189997 A1 | 30-09-2021 |
| EP 4243117 | A1 | 13-09-2023 | CN | 116529907 A | 01-08-2023 |
| | | | EP | 4243117 A1 | 13-09-2023 |
| | | | JP | 7632947 B2 | 19-02-2025 |
| | | | JP | 2023552355 A | 15-12-2023 |
| | | | KR | 20220101316 A | 19-07-2022 |
| | | | KR | 20250114259 A | 29-07-2025 |
| | | | US | 2024038983 A1 | 01-02-2024 |
| | | | WO | 2022149951 A1 | 14-07-2022 |

EPO FORM P0459

For more details about this annex : see Official Journal of the European Patent Office, No. 12/82